# FASCICULE DE BREVET EUROPEEN

(11) **EP 3 501 671 B1**
(45) Date de publication et mention de la délivrance du brevet: **09.09.2020**
(21) Numéro de dépôt: 18200249.3
(22) Date de dépôt: 12.10.2018
(51) Int. Cl.: B07C 3/00, G01D 5/14

(54) **DISPOSITIF DE DETECTION AUTO-ALIGNEUR**
SELBSTAUSRICHTENDE DETEKTIONSVORRICHTUNG
SELF-ALIGNING DETECTION DEVICE

(30) Priorité: 22.12.2017 FR 1762938
(43) Date de publication de la demande: 26.06.2019
(73) Titulaire: Solystic, 92220 Bagneux (FR)
(72) Inventeur: PANO, Damien, 26000 VALENCE (FR); DUCLOT, Christian, 07100 Annonay (FR); VIMARD, Arnaud, 26000 VALENCE (FR)
(74) Mandataire: Prugneau, Philippe

(56) Documents cités:
- WO-A1-97/36523
- US-A1- 2007 072 656

## Description

### Domaine technique

L'invention concerne notamment une machine de tri d'articles de courrier comprenant des sorties de tri avec un dispositif de stockage comprenant un logement dans lequel vient s'insérer un réceptacle dans lequel les articles de courrier triés sont stockés.

### Technique antérieure

Un tel type de machine est exploité plus particulièrement dans des centres de tri postaux pour trier des colis.

Le réceptacle de chaque sortie de tri se présente généralement sous la forme d'une caisse roulante d'assez grandes dimensions.

Pour insérer la caisse dans le logement, l'opérateur la fait rouler jusqu'au fond du logement jusqu'à une position de butée.

Le volet d'aiguillage de chaque sortie de tri doit être placé en position d'aiguillage des colis vers la caisse seulement quand celle-ci est correctement enfoncée dans le logement.

On a déjà constaté que le positionnement des caisses peut varier dans une certaine mesure, certaines caisses pouvant être désaxées par rapport au logement.

Il existe donc un besoin d'un capteur qui permet de détecter la présence de la caisse dans le logement pour commander le pivotement du volet d'aiguillage.

En particulier, le capteur doit permettre une certaine tolérance de positionnement de la caisse dans le logement tout en assurant une détection fiable du bon positionnement de la caisse dans le logement de façon à éviter qu'un colis puisse chuter au sol en dehors de la caisse.

La demande de brevet US 2007/0072656 décrit un dispositif électronique refermable par pivotement de deux éléments l'un par rapport à l'autre, l'un des deux éléments comprenant un détecteur magnétique.

### Exposé de l'invention

A cet effet, l'invention a pour objet un dispositif de détection, comprenant un élément activateur et un élément détecteur mobiles l'un par rapport à l'autre, l'élément détecteur produisant un signal de détection par effet de proximité quand l'élément activateur lui fait face, caractérisé en ce qu'il comprend un système pendulaire avec un premier levier portant l'élément détecteur et un second levier portant l'élément activateur, lesdits leviers étant montés sur un pivot commun en étant décalés angulairement l'un de l'autre, le second levier étant conçu pour pivoter à partir d'une position de repos en direction du premier levier sous l'effet d'une poussée et se rapprocher angulairement du premier levier jusqu'à un état d'alignement où l'élément activateur et l'élément détecteur sont en alignement et en ce que lesdits premier et second leviers sont conçus pour qu'à partir de l'état d'alignement et sous l'effet de la poussée, le second levier entraîne en pivotement le premier levier sur une certaine plage angulaire.

Avec ce dispositif auto-aligneur monté en façade de fond du logement, de telle manière à ce que la face avant de la caisse vienne exercer une poussée sur le second levier quand la caisse est insérée dans le logement, on peut obtenir la détection fiable de la présence de la caisse en bonne position dans le logement pour recevoir les colis.

En particulier, on comprendra que le décalage angulaire d'un levier par rapport à l'autre oblige à une insertion suffisamment profonde de la caisse dans le logement et, en même temps, la possibilité de pivotement des deux leviers sur la plage angulaire permet une certaine tolérance de positionnement de la caisse dans le logement, par exemple un positionnement en biais de la caisse dans le logement.

Selon cette machine, la sécurité des opérateurs est assurée sans investissement important, grâce à de légères modifications des équipements, et sans impact sur les méthodes de travail habituelles, en particulier sur le type de réceptacles utilisés et la façon de les manipuler ; en effet, même si les réceptacles habituellement utilisés ont des dimensions et des formes mal définies et sont positionnés sous les volets de manière approximative, leur présence et leur absence peuvent être sûrement détectées, empêchant l'ouverture des volets à un moment où cela pourrait représenter un danger pour les opérateurs et/ou nuire aux opérations de tri.

En outre, grâce à la configuration du dispositif de détection, cette machine peut avantageusement utiliser des détecteurs de proximité conventionnels à la fois fiables, robustes et bon marché, mais qui ne peuvent d'ordinaire être utilisés que dans le cas de géométries très bien définies, comme pour détecter par exemple la fermeture d'une porte.

L'invention peut avantageusement présenter les particularités suivantes :
- une butée peut être prévue pour maintenir le premier levier en décalage angulaire avec le second levier en position de repos ;
- le second levier peut être muni d'une languette qui est destinée à venir en appui sur le premier levier pour son entraînement en pivotement sur ladite certaine plage angulaire ;
- le second levier peut être rappelé vers sa position de repos par un ressort de rappel ;
- une autre butée peut être prévue pour bloquer le pivotement du premier levier en limite maximale de ladite certaine plage angulaire ;
- ledit second levier peut pendre sensiblement verticalement en position de repos ; et
   - l'effet de proximité peut être un effet magnétique. L'invention peut en outre s'étendre à :
- un dispositif de stockage pouvant comprendre un châssis formant un logement ayant une façade de fond et dans lequel un réceptacle de stockage peut venir s'insérer, caractérisé en ce qu'il comprend le dispositif de détection selon l'invention, ledit dispositif de détection étant monté sur la façade de fond du logement, ledit réceptacle ayant une face avant apte à exercer ladite poussée sur le second levier quand le réceptacle est inséré dans le logement ; et
- une machine de tri d'articles de courrier caractérisée en ce qu'elle peut comprendre des sorties de tri avec chacune un dispositif de stockage selon l'invention, et un volet d'aiguillage des articles de courrier dans le dispositif de stockage, le volet étant commandé à partir dudit signal de détection.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A illustre schématiquement et en partie un exemple d'une machine de tri selon l'invention avec des réceptacles en position de chargement ;
- la figure 1B illustre un dispositif de détection selon l'invention, son intégration dans la machine de tri de la figure 1A et son positionnement par rapport à un réceptacle ;
- la figure 2A montre une vue en perspective du dispositif de détection de la figure 1B ;
- la figure 2B illustre le fonctionnement du dispositif de détection de la figure 1B ;
- la figure 3 représente un schéma-bloc illustrant les relations fonctionnelles entre des éléments assurant le fonctionnement de la machine de tri illustrée par la figure 1A, incluant le dispositif de détection de la figure 1B ; et
- la figure 4 montre en partie un dispositif de stockage selon l'invention, et l'intégration du dispositif de détection de la figure 1B dans ce dispositif de stockage.

### Description d'un mode de réalisation

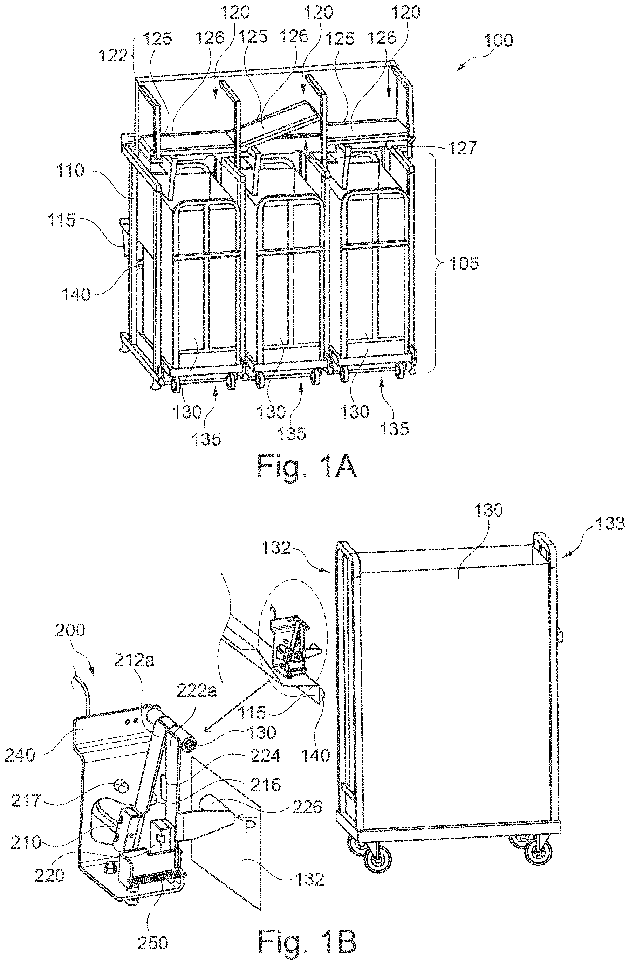

Une machine 100 de tri d'articles de courrier comprenant un dispositif de stockage 105 et un dispositif de détection selon l'invention est illustrée par les figures 1A à 4.

La machine 100 de tri illustrée par la figure 1A est d'ordinaire intégrée dans une installation de tri dans laquelle des articles à trier sont réceptionnés, puis disposés sur un convoyeur qui les amène jusqu'à un convoyeur de tri 122 intégré à la machine de tri 100 et comprenant des sorties 125 de tri.

En opération, des opérateurs mettent des réceptacles 130 en position de chargement dans le dispositif de stockage 105 sous le convoyeur de tri 120, réceptacles vers lesquels la machine de tri oriente les articles à trier qui lui sont amenés.

Les réceptacles 130 ont vocation à être échangés en cours de tri, et peuvent être des chariots à roulettes comme ceux montrés dans les figures 1A et 1B, ou tout autre contenant apte à recueillir des objets chutant du convoyeur, comme des cartons.

Pour la bonne marche des opérations de tri et pour des raisons de sécurité, une machine de tri selon l'invention comprend des dispositifs de détection 200 permettant de détecter la présence ou non des réceptacles sous le convoyeur de tri 120.

Le convoyeur de tri 122 est composé de volets 125 comprenant chacun un tapis roulant 126 pour convoyer les articles et maintenir fermées les sorties 125 de tri lorsque les volets sont en position fermée.

Les volets 125 peuvent pivoter jusqu'à une position ouverte pour former une ouverture 127 dans le convoyeur 120 de manière à laisser chuter des articles sous le convoyeur de tri 122, dans les réceptacles 130.

Un châssis 110 forme le dispositif de stockage 105 qui peut supporter le convoyeur de tri 122 et qui définit des logements 135 de réceptacles sous chacun des volets 125, de manière à ce que chaque réceptacle 130 mis en position de chargement dans un des logements puisse recevoir des colis chutant du convoyeur de tri 120 à la suite de l'ouverture du volet 125 le surplombant.

Les volets sont commandés par un système de contrôle/commande 260 configuré pour ouvrir et fermer les volets selon un plan de tri indiquant une sortie, et donc un réceptacle de destination, pour chaque article à trier.

Le plan de tri peut par exemple être enregistré dans une mémoire informatique 265 en communication fonctionnelle avec le système de contrôle/commande.

Le système de contrôle/commande est en outre fonctionnellement connecté aux dispositifs de détection 200 de présence des réceptacles sous les volets, et a une fonction de sécurité qui consiste à bloquer l'ouverture de chaque volet sous lequel la présence d'un réceptacle en position de charge n'est pas détectée.

Chaque dispositif de détection 200 est intégré au niveau d'une façade (136) de fond d'un logement du dispositif de stockage 105, et est configuré pour envoyer au système de contrôle/commande des signaux de détection de la présence d'un réceptacle dans ledit logement.

Chaque volet est associé à l'un des dispositifs de détection, chacun fixé sur une plaque de fixation 240 montée sur un élément 115 du châssis dans la façade de fond d'un logement et s'étendant de façon à être adjacent aux faces avant 132 de réceptacles en position de chargements dans les logements 135.

Les dispositifs de détection sont en outre configurés de façon telle qu'un réceptacle mis en place dans un logement par poussée sur sa face arrière 133 entraîne l'envoi d'un signal de détection par l'un des dispositifs de détection.

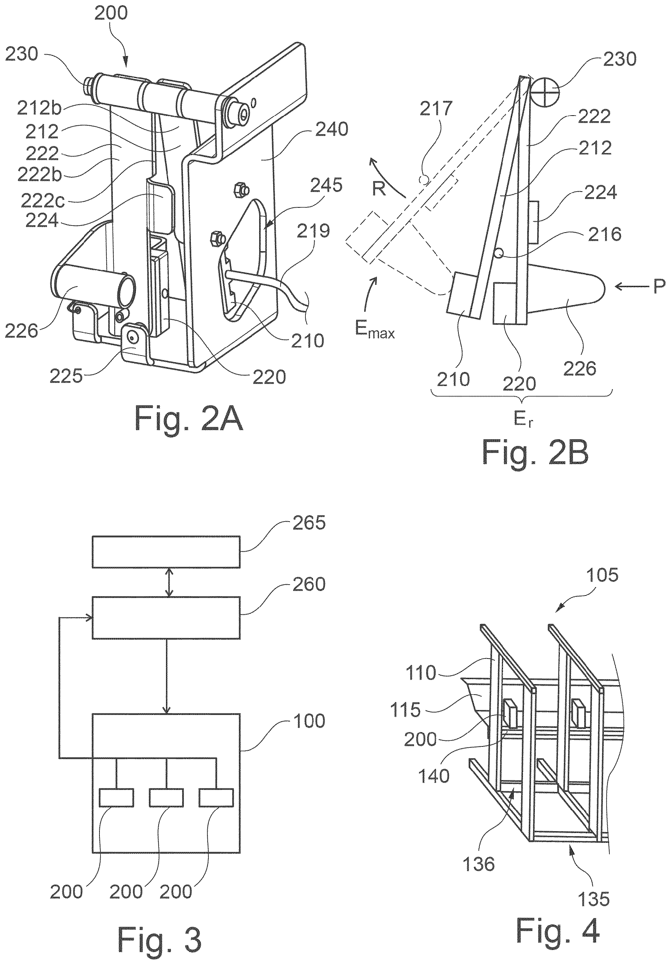

Un dispositif de détection 200, illustré par les figures 1B, 2A et 2B, est basé sur l'emploi d'un capteur de proximité conventionnel qui est constitué de deux éléments 210 et 220 qui sont, respectivement, un élément détecteur 210 et un élément activateur 220 ayant pour fonction d'activer l'élément détecteur par effet de proximité lorsque les deux éléments se font face à faible distance.

L'effet de proximité d'un tel capteur peut être, par exemple, un effet magnétique, capacitif ou inductif.

Les deux éléments du capteur sont montés sur un système pendulaire comportant deux leviers, l'élément détecteur étant monté sur une face avant 212a d'un premier levier 212 et l'élément activateur sur une face avant 222a d'un second levier 222.

Les deux leviers sont arrangés pour pivoter autour d'un axe de pivot 230, ou pivot 230, commun monté transversalement sur la plaque de fixation 240, le premier levier 212 étant interposé entre la plaque de fixation et le second levier 222.

Les deux éléments du capteur de proximité se situent substantiellement à une même distance du pivot, et les leviers sont suffisamment proches l'un de l'autre pour que l'élément activateur active l'élément détecteur lorsqu'ils se font face.

La plaque 240 et l'axe 230 sont situés et orientés de manière telle que la mise en place d'un réceptacle en position de chargement dans un logement donné entraine la mise en rotation R des leviers du dispositif de détection correspondant par une poussée P comme indiqué sur les figures 1B et 2B.

Une première butée 216 et une seconde butée 217 s'étendent parallèlement à l'axe 230 depuis la plaque 240, suffisamment longues pour bloquer au moins la rotation du premier levier, la première butée 216 étant suffisamment courte pour ne pas bloquer la rotation du second levier.

Dans un état de repos Er du dispositif, lesdits leviers sont décalés angulairement l'un de l'autre, comme visible sur les figures 1B et 2B.

Plus précisément, le premier levier 212 est incliné, sa face arrière 212b étant en contact avec la première butée 216 qui bloque sa rotation, tandis que le second levier 222 est dans une position de repos plus basse que le premier levier, par exemple pendant de l'axe 230 substantiellement verticalement.

Dans l'état Er du dispositif, en raison du décalage angulaire entre les leviers du à la butée 216, les deux éléments du capteur sont en état de désalignement, c'est-à-dire qu'ils ne se font pas face, et l'élément activateur ne peut pas activer l'élément détecteur.

Une languette d'entraînement 224 s'étend du second levier et est configurée pour que le second levier 222 entraîne en rotation le premier levier 212 en le poussant sur sa face arrière 212b.

Plus précisément, la languette d'entraînement 224 s'étend en direction de la plaque de fixation 240 à partir d'un côté 222c du second levier 212 faisant face à la plaque de fixation 240, de manière à pouvoir contacter la face arrière 212b du premier levier 212.

La languette 224 comprend un épaulement de sorte que, quand la languette est en contact avec la face arrière du premier levier 212, les deux leviers sont alignés l'un sur l'autre, ou superposés, lorsque vus dans la direction de l'axe 130, et les deux éléments 210 et 220 du capteur sont alignés également et se font face.

Dans un état Emax du dispositif, la face avant 212a du premier levier est en contact avec la seconde butée 217 et sa face arrière 212b est en contact avec la languette d'entraînement 224 du second levier.

Dans l'état Emax, les leviers 212 et 222 d'une part et les éléments 212 et 222 du capteur d'autre part sont alignés entre eux, respectivement, la figure 2B illustrant cet état où, dans la vue de la figure, les leviers et les éléments du capteur, en pointillés, sont superposés.

Un membre actionneur 226 s'étend du second levier 222 vers l'arrière de celui-ci jusque dans le volume d'un logement 135, le membre actionneur étant conçu de manière à transmettre au second levier 222 une poussée P d'un réceptacle 130 mis en place dans ce logement.

Le membre actionneur peut avoir une forme quelconque, mais qui est de préférence adaptée au type de réceptacle utilisé, et ne se limite pas à la forme illustrée sur les figures.

L'état Emax correspond à une amplitude de rotation maximale des leviers, obtenue à la suite d'une poussée exercée sur le second levier 222 et d'un entraînement en rotation du premier levier 212 par la languette d'entraînement 224 du second levier 222.

Un ressort 250 de rappel peut être fixé entre la plaque de fixation 240 et le second levier 222 de manière à assurer le retour de ce dernier en position basse après qu'il ait été déplacé par la poussée P du réceptacle 130.

Le ressort n'est pas strictement nécessaire au retour du second levier 222 en position basse, la gravité seule étant normalement suffisante pour ramener ce levier à cette position, mais il représente une sécurité au cas où une difficulté imprévue ou non détectée surviendrait, comme par exemple un blocage de la rotation autour de l'axe de pivot 230 par de la corrosion rendant la gravité seule insuffisante au pivotement du levier jusque sa position de repos.

Une languette 225 peut s'étendre de la plaque de fixation 240 pour imposer une position de repos donnée au second levier 222.

Une troisième butée 140, fixée sur l'élément 115 du châssis, s'étend horizontalement au fond de chacun des logements 135 pour stopper l'avancée des réceptacles 135 lorsqu'ils sont poussés dans les logements pour être mis en position de chargement sous les volets, de manière à ne pas amener par poussée directe le premier levier et/ou le second levier en contact avec la seconde butée 217, ce qui pourrait endommager le dispositif.

La seconde butée 217 sert à stopper la rotation du premier levier 212 pour le cas où il continuerait sa rotation par effet d'inertie après la mise en place d'un réceptacle dans un logement, et prévient ainsi le pincement d'un câble 219 d'alimentation électrique et/ou de contrôle sortant de l'élément détecteur 210 et passant par une ouverture 245 dans la plaque de fixation 240.

En opération, dans la situation où le logement du réceptacle donné est vide, le dispositif de détection correspondant se trouve dans l'état de repos Er, les éléments du détecteur 200 sont en état de désalignement, aucun signal de détection de présence d'un réceptacle n'est envoyé, et le volet correspondant est bloqué en position fermée.

A partir de cette situation, lorsqu'un réceptacle 130 est mis en place manuellement par un opérateur dans un logement 135, le réceptacle pousse le second levier 222 d'un dispositif de détection 200 donné via son membre actionneur 226, et le fait pivoter à partir de sa position de repos de sorte qu'il se rapproche angulairement du premier levier 210 jusqu'à un état d'alignement où l'élément activateur et l'élément détecteur sont en alignement.

Les premier et second leviers sont conçus pour qu'à partir de cet état d'alignement, et sous l'effet de la poussée, le second levier entraîne en pivotement le premier levier sur une certaine plage angulaire.

Plus particulièrement, au cours de la rotation du second levier 222, la languette 224 entre en contact initial avec le premier levier 212 qui est en contact avec la butée 216, puis entraîne celui-ci en rotation lorsque la rotation du second levier se poursuit.

A partir du contact initial et tant que le contact entre la languette et le premier levier est maintenu, les deux éléments 210 et 220 du capteur sont alignés l'un sur l'autre, et un signal de détection de réceptacle est envoyé au système de contrôle/commande qui autorise en réponse l'ouverture du volet correspondant au dispositif de détection donné.

Un ordre d'ouverture du volet ne sera envoyé à la machine de tri par le système de contrôle/commande que si les deux conditions suivantes sont réunies simultanément : 1) réception du signal de détection d'un réceptacle et 2) arrivée d'un colis à faire chuter dans ledit réceptacle au niveau du volet correspondant.

De cette façon, l'absence de réceptacle dans un logement donné bloque l'ouverture du volet correspondant, ce qui, d'une part, assure la bonne marche des opérations de tri, et, d'autre part, prévient tout risque lié à la cinématique du volet pour les opérateurs qui, en l'absence du réceptacle, ont un accès direct au volet.

Un signal de détection de réceptacle peut être envoyé de façon continue tant que l'élément détecteur et l'élément activateur sont alignés, ou une pluralité de signaux de détection peuvent être envoyés à intervalles de temps suffisamment brefs pour qu'un retrait du réceptacle soit détecté suffisamment rapidement pour ne pas impacter les opérations de tri et/ou compromettre la sécurité des opérateurs.

Puisque la languette d'entraînement maintient l'alignement des deux éléments de détection sur une certaine plage angulaire de rotation des leviers, ou encore sur une plage de rotation du second levier poussé par le réceptacle, le signal de détection du réceptacle peut être envoyé indépendamment de la position exacte du réceptacle dans son logement, pour des états du dispositif quelconques entre un état où le contact initial se fait entre la languette 224 et le premier levier 212 en contact avec la butée 216 et l'état Emax où l'amplitude de rotation maximale des leviers est atteinte.

Ainsi, le dispositif mécanique décrit plus haut permet un alignement automatique de deux éléments composant un détecteur de proximité, ce qui constitue un dispositif de détection auto-aligneur.

Lorsque le réceptacle est retiré de son logement pour être remplacé, la gravité et le ressort 250 ramènent le dispositif dans son état Er, l'envoi d'un signal de détection positive du réceptacle s'interrompt, et le volet est bloqué en position fermée jusqu'à ce qu'un réceptacle soit à nouveau mis en place dans le logement comme décrit ci-dessus.

## Revendications

1. Dispositif de détection, comprenant un élément activateur (220) et un élément détecteur (210) mobiles l'un par rapport à l'autre, l'élément détecteur produisant un signal de détection par effet de proximité quand l'élément activateur lui fait face, le dispositif de détection comprenant en outre un système pendulaire avec un premier levier (212) portant l'élément détecteur (210) et un second levier (222) portant l'élément activateur (220), lesdits leviers étant montés sur un pivot (230) commun en étant décalés angulairement l'un de l'autre, le second levier étant conçu pour pivoter à partir d'une position de repos en direction du premier levier sous l'effet d'une poussée (P) et se rapprocher angulairement du premier levier jusqu'à un état d'alignement où l'élément activateur et l'élément détecteur sont en alignement, lesdits premier et second leviers étant conçus pour qu'à partir de l'état d'alignement et sous l'effet de la poussée, le second levier entraîne en pivotement le premier levier sur une certaine plage angulaire.

2. Le dispositif de détection selon la revendication 1, **caractérisé en ce qu'**une butée (216) est prévue pour maintenir le premier levier en décalage angulaire avec le second levier en position de repos.

3. Le dispositif de détection selon la revendication 1 ou 2, **caractérisé en ce que** le second levier est muni d'une languette (224) qui est destinée à venir en appui sur le premier levier pour son entraînement en pivotement sur ladite certaine plage angulaire.

4. Le dispositif de détection selon l'une des revendications 1 à 3, **caractérisé en ce que** le second levier est rappelé vers sa position de repos par un ressort (250) de rappel.

5. Le dispositif de détection selon l'une des revendications 1 à 4, **caractérisé en ce qu'**une autre butée (218) est prévue pour bloquer le pivotement du premier levier en limite maximale de ladite certaine plage angulaire.

6. Le dispositif de détection selon l'une des revendications 1 à 5, **caractérisé en ce que** ledit second levier pend sensiblement verticalement en position de repos.

7. Le dispositif de détection selon l'une des revendications 1 à 6, **caractérisé en ce que** l'effet de proximité est un effet magnétique.

8. Dispositif de stockage comprenant un châssis (110) formant un logement (135) ayant une façade (136) de fond et dans lequel un réceptacle (130) de stockage peut venir s'insérer, **caractérisé en ce qu'**il comprend le dispositif de détection (200) selon l'une des revendications 1 à 7, ledit dispositif de détection étant monté sur la façade (136) de fond du logement, ledit réceptacle ayant une face avant(132) apte à exercer ladite poussée sur le second levier quand le réceptacle est inséré dans le logement.

9. Machine de tri d'articles de courrier **caractérisée en ce qu'**elle comprend des sorties de tri (120) avec chacune un dispositif de stockage selon la revendication 8, et un volet (125) d'aiguillage des articles de courrier dans le dispositif de stockage (105), le volet étant commandé à partir dudit signal de détection.

## Patentansprüche

1. Detektionsvorrichtung, umfassend ein Aktivierungselement (220) und ein Detektionselement (210), die das eine in Bezug auf das andere beweglich sind, wobei das Detektionselement ein Detektionssignal durch Proximity-Effekt erzeugt, wenn das Aktivierungselement diesem zugekehrt ist, wobei die Detektionsvorrichtung ferner ein Pendelsystem mit einem das Detektionselement (210) tragenden ersten Hebel (212) und einem das Aktivierungselement (220) tragenden zweiten Hebel (222) umfasst, wobei die Hebel auf einem gemeinsamen Drehachse (230) montiert und zugleich winkelmäßig das eine von dem anderen versetzt sind, wobei der zweite Hebel ausgebildet ist, um ausgehend von einer Ruheposition in Richtung des ersten Hebels unter der Einwirkung eines Schubes (P) zu schwenken und sich winkelmäßig dem ersten Hebel bis zu einem ausgerichteten Zustand anzunähern, an dem das Aktivierungselement und das Detektionselement ausgerichtet ist, wobei die ersten und zweiten Hebel ausgebildet sind, dass ausgehend von dem ausgerichteten Zustand unter dem Eindruck des Schubes der zweite Hebel den ersten Hebel schwenkend über einen gewissen Winkelbereich mitnimmt.

2. Detektionsvorrichtung nach Anspruch 1, **dadurch gekennzeichnet, dass** ein Anschlag (216) vorgesehen ist, um in Ruhestellung den ersten Hebel in einem Winkelversatz zu dem zweiten Hebel zu halten.

3. Detektionsvorrichtung nach Anspruch 1 oder 2, **dadurch gekennzeichnet, dass** der zweite Hebel mit einer Lasche (224) ausgestattet ist, die dazu bestimmt ist, sich an dem ersten Hebel für dessen schwenkende Mitnahme über den Winkelbereich abzustützen.

4. Detektionsvorrichtung nach einem der Ansprüche 1 bis 3, **dadurch gekennzeichnet, dass** der zweite Hebel durch eine Rückstellfeder (250) in seine Ruheposition belastet ist.

5. Detektionsvorrichtung nach einem der Ansprüche 1 bis 4, **dadurch gekennzeichnet, dass** ein weiterer Anschlag (218) vorgesehen ist, um die Verschwenkung des ersten Hebels an der maximalen Begrenzung des Winkelbereichs zu blockieren.

6. Detektionsvorrichtung nach einem der Ansprüche 1 bis 5, **dadurch gekennzeichnet, dass** in der Ruheposition der zweite Hebel im Wesentlichen vertikal hängt.

7. Detektionsvorrichtung nach einem der Ansprüche 1 bis 6, **dadurch gekennzeichnet, dass** der Proximity-Effekt ein magnetischer Effekt ist.

8. Lagervorrichtung, umfassend ein Gestell (110), welches eine Aufnahme (135) mit einer Bodenwandung (136) bildet, in die ein Behältnis (130) einsetzbar ist, **dadurch gekennzeichnet, dass** sie die Detektionsvorrichtung (200) nach einem der Ansprüche 1 bis 7 umfasst, wobei die Detektionsvorrichtung auf der Bodenwandung (136) der Aufnahme montiert ist, wobei das Behältnis eine Vorderseite (132) aufweist, die in der Lage ist, den Schub auf den zweiten Hebel auszuüben, wenn das Behältnis in die Aufnahme eingesetzt wird.

9. Sendungsgutsortiermaschine, **dadurch gekennzeichnet, dass** sie Sortierausgänge (120) mit jeweils einer Lagervorrichtung nach Anspruch 8 und eine Leitklappe (125) der Sendungsgüter in der Lagervorrichtung (105) umfasst, wobei die Klappe ausgehend von dem Detektionssignal gesteuert ist.

## Claims

1. A detector device comprising an activator element (220) and a detector element (210) that are mounted to move relative to each other, the detector element generating a detection signal by a proximity effect when the activator element is facing it, said detector device further comprising a swing system with a first lever (212) carrying the detector element (210) and a second lever (222) carrying the activator element (220), said levers being mounted on a common pivot (230) while being offset angularly from each other, the second lever being designed to pivot from a rest position towards the first lever under the effect of a thrust (P) and to move angularly closer to the first lever until it reaches a state of alignment in which the activator element and the detector element are in alignment, said first and second levers being designed such that, starting from the state of alignment and under the effect of the thrust, the second lever causes the first lever to pivot through a certain angular range.

2. The detector device according to claim 1, **characterized in that** an abutment (216) is provided to maintain the first lever angularly offset from the second lever in the rest position.

3. The detector device according to claim 1 or claim 2, **characterized in that** the second lever is provided with a tab (224) that is designed to come to bear against the first lever to cause it to pivot through said certain angular range.

4. The detector device according to any one of claims 1 to 3, **characterized in that** the second lever is urged to return towards its rest position by a return spring (250).

5. The detector device according to any one of claims 1 to 4, **characterized in that** another abutment (218) is provided to stop the pivoting of the first lever at the maximum limit of said certain angular range.

6. The detector device according to any one of claims 1 to 5, **characterized in that** said second lever hangs substantially vertically in the rest position.

7. The detector device according to any one of claims 1 to 6, **characterized in that** the proximity effect is a magnetic effect.

8. A storage device including a frame (110) forming a recess (135) having a far end plane (136) and into which a storage receptacle (130) can be inserted, said storage device being **characterized in that** it includes the detector device (200) according to any one of claims 1 to 7, said detector device being mounted on the far end plane (136) of the recess, said receptacle having a front face (132) suitable for exerting said thrust on the second lever when the receptacle is inserted in the recess.

9. A mailpiece sorting machine **characterized in that** it includes sorting outlets (120), each of which has a storage device according to claim 8, and a switching flap (125) for diverting mailpieces into the storage device (105), the flap being controlled on the basis of said detection signal.
